# EUROPEAN PATENT APPLICATION

(11) **EP 4 455 631 A1**
(43) Date of publication of application: **30.10.2024**
(21) Application number: 24169313.4
(22) Date of filing: 09.04.2024
(51) Int. Cl.: G01M 17/02

(54) **METHOD FOR FORMING SNOW SURFACE FOR TIRE EVALUATION**

(30) Priority: 27.04.2023 JP 2023072948
(71) Applicant: Sumitomo Rubber Industries, Ltd., Kobe-shi, Hyogo 651-0072 (JP)
(72) Inventor: SHIMIZU, Satoshi, Kobe-shi, 651-0072 (JP)
(74) Representative: Manitz Finsterwald Patent- und Rechtsanwaltspartnerschaft mbB

(57) **Abstract**

A method for forming a snow surface for tire evaluation is a method for forming a snow surface, for tire evaluation, which is formed on a surface 6a of a compressed snow layer 6 disposed at an inner surface of a drum 2, and includes: a first step of disposing a cutting blade 32 for cutting the compressed snow layer 6, at a support mechanism 4 for supporting a tire T that runs on an inner surface side of the drum 2; a second step of bringing the cutting blade 32 into contact with the compressed snow layer 6 so as to dispose an end 32a1 of the cutting blade 32 at a predetermined depth from the surface 6a of the compressed snow layer 6, and moving the cutting blade 32 between a first position P1 and a second position P2 of the surface 6a of the compressed snow layer 6 in parallel with a width direction of the compressed snow layer 6 while rotating the drum 2 at a predetermined circumferential speed; and a third step of repeating the second step until the compressed snow layer 6 has a predetermined thickness.

## Description

### BACKGROUND OF THE INVENTION

### Field of the Invention

The present invention relates to a method for forming a snow surface for tire evaluation.

### Background Art

For evaluating tire performance on a snow surface, in addition to the evaluation being performed outdoors, an artificial snow surface may be provided indoors to evaluate tire performance on the artificial snow surface. Japanese Laid-Open Patent Publication (translation of PCT application) No. 2005-515110 discloses a method for forming indoors an artificial snow surface for tire evaluation.

An object of the present invention is to provide a technique capable of forming an even snow surface in which unevenness is reduced.

### SUMMARY OF THE INVENTION

(1) A method for forming a snow surface for tire evaluation according to the present invention is directed to a method for forming a snow surface for tire evaluation in which the snow surface for tire evaluation is formed on a surface of a compressed snow layer disposed at an inner surface of a drum. The forming method includes: a first step of disposing a cutting blade for cutting the compressed snow layer, at a support mechanism for supporting a tire that runs on an inner surface side of the drum; a second step of bringing the cutting blade into contact with the compressed snow layer so as to dispose an end of the cutting blade at a predetermined depth from the surface of the compressed snow layer, and moving the cutting blade between a first position and a second position of the surface of the compressed snow layer in parallel with a width direction of the compressed snow layer while rotating the drum at a predetermined circumferential speed; and a third step of repeating the second step until the compressed snow layer has a predetermined thickness.

In this configuration, the snow surface for tire evaluation can be formed by cutting the surface of the compressed snow layer with the cutting blade disposed at the support mechanism. Therefore, a mechanism or the like for providing the cutting blade need not be added, and the even snow surface in which unevenness is reduced can be formed by appropriately adjusting the cutting conditions.

(2) Preferably, the above-described method for forming a snow surface for tire evaluation further includes a step of removing, after the third step, snow which has been cut out by the cutting blade.

In this case, the cut snow can be inhibited from affecting tire evaluation.

(3) In the above-described method for forming a snow surface for tire evaluation, preferably, a cutting trace is helically formed by the cutting blade without forming gaps in an axial direction.

In this case, the surface of the compressed snow layer can be evenly cut.

(4) In the above-described method for forming a snow surface for tire evaluation, the predetermined depth is preferably 0.3 mm or more and 5.0 mm or less.

If the predetermined depth is less than 0.3 mm, a cut amount of the compressed snow layer is reduced, and a time required for forming the snow surface for evaluation becomes long. If the predetermined depth is more than 5.0 mm, a cut amount of the compressed snow layer becomes relatively great, and adjustment of the thickness of the compressed snow layer may become difficult.

In a case where the predetermined depth is 0.3 mm or more and 5.0 mm or less, the snow surface for evaluation can be appropriately formed.

(5) In the above-described method for forming a snow surface for tire evaluation, a distance from the first position to the second position is preferably 1000 mm or more and 3000 mm or less.

If the distance from the first position to the second position is less than 1000 mm, the snow surface cannot be sufficiently obtained for the tire evaluation. If the distance from the first position to the second position is more than 3000 mm, a time required for forming the snow surface for evaluation becomes long. In a case where the distance from the first position to the second position is 1000 mm or more and 3000 mm or less, the snow surface for evaluation can be appropriately formed.

(6) In the above-described method for forming a snow surface for tire evaluation, the predetermined circumferential speed is preferably 30 km/h or higher and 100 km/h or lower.

If the circumferential speed is lower than 30 km/h, a time required for forming the snow surface for evaluation becomes long. If the circumferential speed is higher than 100 km/h, an adjustment allowance of the speed for parallel movement of the cutting blade in the width direction is reduced, and appropriate setting of the cutting condition becomes difficult. In a case where the circumferential speed of the drum is 30 km/h or higher and 100 km/h or lower, the snow surface for evaluation can be appropriately formed in a short time period.

(7) In the above-described method for forming a snow surface for tire evaluation, a moving speed of the cutting blade is preferably 5 mm/s or higher and 40 mm/s or lower.

If the moving speed is lower than 5 mm/s, the circumferential speed of the drum needs to be significantly reduced in some cases, and a time required for forming the snow surface for evaluation becomes long. If the moving speed is higher than 40 mm/s, the circumferential speed of the drum needs to be significantly increased in some cases, and appropriate setting of the cutting condition becomes difficult. In a case where the moving speed of the cutting blade is 5 mm/s or higher and 40 mm/s or lower, the snow surface for evaluation can be appropriately formed in a short time period.

According to the present invention, the even snow surface for tire evaluation in which unevenness is reduced can be formed.

### BRIEF DESCRIPTION OF THE DRAWINGS

FIG. 1 illustrates an example of a tire evaluation apparatus used for forming a snow surface for tire evaluation;
FIG. 2 illustrates steps of forming a snow surface for evaluation;
FIG. 3 illustrates a state where a cutting blade is brought into contact with a compressed snow layer;
FIG. 4 shows a graph representing a relationship between a coefficient of friction and a sliding speed;
FIG. 5(a) illustrates an example of a plurality of teeth of a sled of conventional art; and
FIG. 5(b) illustrates an example of a snow surface that has become uneven.

### DETAILED DESCRIPTION

### [Findings on which the present invention is based]

In the conventional art disclosed in Japanese Laid-Open Patent Publication (translation of PCT application) No. 2005-515110, a sled having a plurality of teeth aligned along the width direction of a snow surface is caused to run on a compressed snow surface, and the snow surface is thus processed.

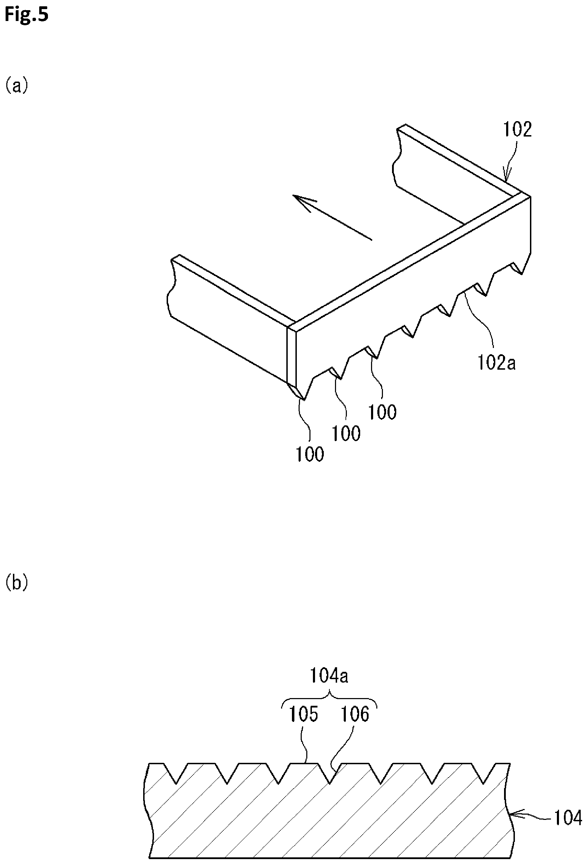

FIG. 5(a) illustrates an example of a plurality of teeth of a sled of conventional art.

In FIG. 5(a), a plurality of teeth 100 are disposed at an edge member 102 on the rear side of the sled. The plurality of teeth 100 protrude from a lower surface 102a of the edge member 102. The plurality of teeth 100 are arranged in a line at the lower surface 102a. The plurality of teeth 100 are provided so as to enter the snow surface over several centimeters.

The sled (edge member 102) travels in the direction (direction indicated by an arrow in FIG. 5(a)) orthogonal to the longitudinal direction of the edge member 102.

At this time, the plurality of teeth dig up the snow surface, and the snow surface becomes uneven.

FIG. 5(b) illustrates an example of a snow surface that has become uneven. As illustrated in FIG. 5(b), a snow surface 104a of a compressed snow layer 104 has smooth portions 105 and recesses 106. The smooth portion 105 is a surface that has been made smooth by compressing snow. The recess 106 is a portion recessed from the smooth portion 105. The recess 106 is formed into a groove-like shape along the sled traveling direction by digging up the snow surface by the plurality of teeth 100.

If a snow surface for evaluation has such unevenness, this may cause reduction of accuracy of a tire evaluation test. Therefore, a technique of forming an even snow surface in which the unevenness is reduced has been desired.

### [Details of embodiment]

A preferred embodiment will be described below with reference to the drawings.

### [Tire evaluation apparatus]

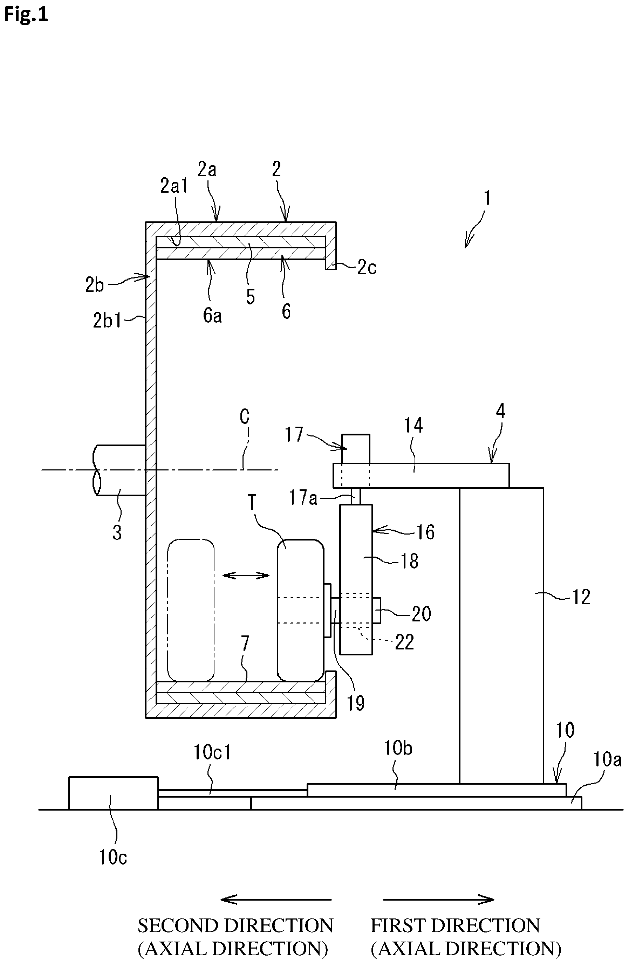

FIG. 1 illustrates an example of a tire evaluation apparatus used for forming a snow surface for tire evaluation.

A tire evaluation apparatus 1 illustrated in FIG. 1 has a drum 2 having an inner circumferential side on which a tire T runs, and a support mechanism 4 for supporting the tire T on the inner surface side of the drum 2. That is, the tire evaluation apparatus 1 is a so-called inside drum-type evaluation apparatus.

The drum 2 is supported by a driving mechanism (not illustrated). The drum 2 includes a cylindrical portion 2a, a disk-shaped portion 2b, and an annular portion 2c.

The cylindrical portion 2a has a horizontal center axis C. The center axis C is horizontal. The drum 2 and the support mechanism 4 are aligned along the center axis C.

In the following description, the direction parallel to the center axis C is referred to as axial direction, the direction from the drum 2 side toward the support mechanism 4 side in the axial direction is referred to as first direction, and the direction from the support mechanism 4 side toward the drum 2 side in the axial direction is referred to as second direction.

On an inner circumferential surface 2a1 of the cylindrical portion 2a, a base layer 5 and a compressed snow layer 6 are disposed The base layer 5 and the compressed snow layer 6 will be described below.

The disk-shaped portion 2b closes an opening, at the second direction side, of the cylindrical portion 2a. A shaft portion 3 is disposed at an outer surface 2b 1, at the second direction side, of the disk-shaped portion 2b. The axial center of the shaft portion 3 coincides with the center axis C. The driving mechanism holds the shaft portion 3, and drives the drum 2 so as to rotate the drum 2 around the center axis C of the cylindrical portion 2a.

The annular portion 2c is disposed along the edge of the opening, at the first direction side, of the cylindrical portion 2a. The annular portion 2c protrudes radially inward from the edge of the cylindrical portion 2a. The annular portion 2c is in contact with the side surfaces, at the first direction side, of the base layer 5 and the compressed snow layer 6. Thus, the annular portion 2c restricts movement of the base layer 5 and the compressed snow layer 6 in the axial direction.

The tire T and a part of the support mechanism 4 are inserted into the cylindrical portion 2a through the inner circumferential side of the annular portion 2c, and are disposed inside the cylindrical portion 2a.

The support mechanism 4 includes a base 10, a column 12, a horizontal arm 14, and an up-down extending arm 16.

The base 10 has a track 10a, a base body 10b, and an actuator 10c. The base body 10b can be horizontally moved on the track 10a along the axial direction. The actuator 10c has a shaft 10c1 that can be moved forward and backward in the axial direction. The end of the shaft 10c1 is connected to the base body 10b. The actuator 10c can move the base body 10b in the horizontal direction by moving the shaft 10c1 forward and backward.

The column 12 is a column-like member that extends in the up-down direction, and is disposed on the upper surface of the base body 10b. The horizontal arm 14 is disposed at the end of the column 12.

The horizontal arm 14 extends horizontally from the column 12 toward the drum 2.

The up-down extending arm 16 is disposed at the end of the horizontal arm 14.

The up-down extending arm 16 includes an actuator 17, an arm body 18, a rotary shaft 19, and a motor 20.

The actuator 17 is fixed to the end of the horizontal arm 14. The actuator 17 has a shaft 17a that can be moved upward and downward in the up-down direction. The arm body 18, the rotary shaft 19, and the motor 20 are fixed to the shaft 17a. The actuator 17 moves the arm body 18, the rotary shaft 19, and the motor 20 in the up-down direction by moving the shaft 17a upward and downward.

The arm body 18 is fixed to the lower end of the shaft 17a. The arm body 18 extends in the up-down direction.

The rotary shaft 19 and the motor 20 are disposed at the lower end of the arm body 18.

The rotary shaft 19 is rotatably supported by the arm body 18 through a bearing or the like. The rotary shaft 19 is supported so as to be parallel to the axial direction.

The rotary shaft 19 is disposed just below the center axis C.

The tire T is fixed integrally to the end, at the second direction side, of the rotary shaft 19. Therefore, both the tire T and the rotary shaft 19 are rotatably supported by the arm body 18.

The motor 20 drives the rotary shaft 19 so as to rotate the rotary shaft 19. The motor 20 allows a rotation speed of the tire T to be adjusted in the evaluation test.

The support mechanism 4 having the above-described configuration can move the tire T in the up-down direction by using the actuator 17. The support mechanism 4 can move the tire T in the axial direction by using the actuator 10c of the base 10.

Therefore, the support mechanism 4 can move the tire T disposed outside the drum 2 along the second direction, and dispose the tire T in the drum 2. Furthermore, the support mechanism 4 can move the tire T downward, and bring the tire T into contact with the compressed snow layer 6.

The base layer 5 is an ice layer disposed on the inner circumferential surface 2a1 of the cylindrical portion 2a. The compressed snow layer 6 is stacked on the inner circumferential surface of the base layer 5.

The compressed snow layer 6 is formed by stacking snow made by an artificial snow making machine, onto the inner circumferential surface of the base layer 5, and compressing the snow outward in the radial direction.

A surface 6a, on the inner circumferential side, of the compressed snow layer 6 has a snow surface 7 for tire evaluation. The snow surface 7 for tire evaluation (hereinafter, simply referred to also as snow surface 7 for evaluation) is formed by a method for forming a snow surface for tire evaluation as described below.

The up-down extending arm 16 further includes a load measurement device 22. The load measurement device 22 measures a load that acts on the tire T. The load measurement device 22 includes, for example, a plurality of load sensors disposed on the outer circumferential side of the rotary shaft 19. The plurality of load sensors are equally spaced from each other along the outer circumference of the rotary shaft 19, and each output information indicating a load which acts on the rotary shaft 19. The output of the load measurement device 22 is supplied to a controller for controlling the tire evaluation apparatus 1. The controller controls the actuator 17 and adjusts a load that acts on the tire T, based on the output of the load measurement device 22.

Furthermore, the tire evaluation apparatus 1 has a first rotation speed sensor and a second rotation speed sensor (both of which are not illustrated) for detecting a rotation speed of the rotary shaft 19 and a rotation speed of the drum 2. These rotation sensors may be implemented by a Hall sensor of the motor or may be independently disposed in the motor.

The controller has a function of controlling driving mechanisms of the actuator 10c, the motor 20, and the drum 2 in addition to the actuator 17. The controller controls each of the units based on the output of the load measurement device 22 and outputs of the first rotation speed sensor and the second rotation speed sensor.

The controller can control each of the units according to preset conditions, bring the tire T into contact with the snow surface 7 for evaluation in the compressed snow layer 6, and perform test running of the tire T.

The controller can be operated by an operator of the tire evaluation apparatus 1. The operator can discretionarily control and operate the driving mechanisms of the actuator 17, the actuator 10c, the motor 20, and the drum 2.

[Method for forming snow surface for tire evaluation]

Next, a method for forming a snow surface for tire evaluation will be described.

The method for forming a snow surface for tire evaluation according to the present embodiment includes a first step of disposing a cutting blade for cutting the compressed snow layer 6 at the support mechanism 4 for supporting the tire T, a second step of bringing the cutting blade into contact with the surface 6a of the compressed snow layer 6 so as to dispose the end of the cutting blade at a predetermined depth from the surface of the compressed snow layer 6, and moving the cutting blade between a first position and a second position of the surface 6a of the compressed snow layer 6 in parallel with the width direction of the compressed snow layer 6 while rotating the drum 2 at a predetermined circumferential speed, and a third step of repeating the second step until the compressed snow layer 6 has a predetermined thickness.

As described above, the snow surface 7 for evaluation is formed on the surface 6a, on the inner circumferential side, of the compressed snow layer 6.

Firstly, the base layer 5 and the compressed snow layer 6 are provided on the inner circumferential surface 2a1 of the cylindrical portion 2a.

After the base layer 5 of ice is provided on the inner circumferential surface 2a1, snow made by an artificial snow making machine is stacked on the inner circumferential surface of the base layer 5. The snow is evenly stacked in the circumferential direction.

The snow stacked on the inner circumferential surface of the base layer 5 is compressed by the tire T. That is, after snow is stacked on the inner circumferential surface of the base layer 5, the tire T is caused to run on the stacked snow. Thus, the snow on the inner circumferential surface of the base layer 5 is compressed to form the compressed snow layer 6.

Thereafter, the above-described first step is performed.

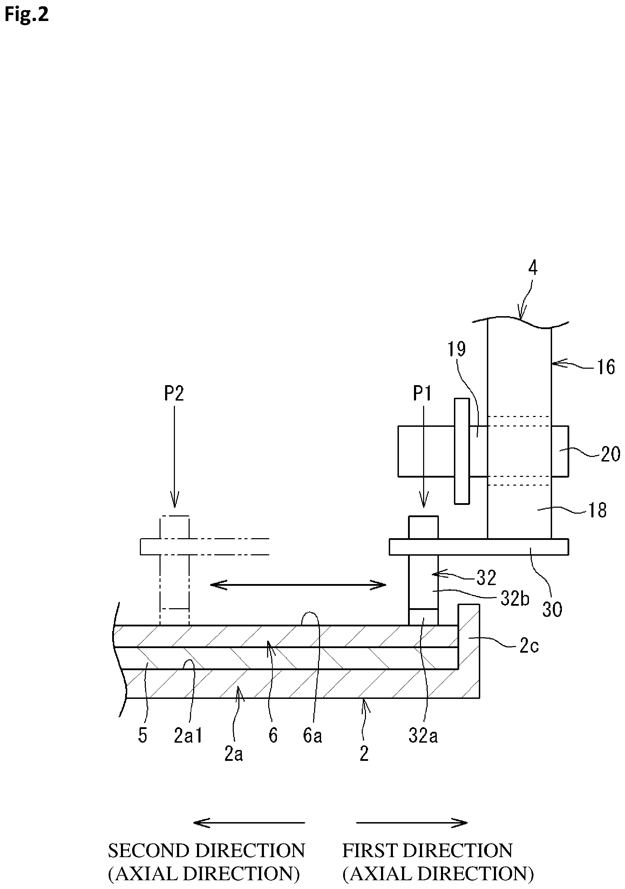

FIG. 2 illustrates the steps of forming the snow surface 7 for evaluation.

FIG. 2 illustrates a portion near the end of the arm body 18 (up-down extending arm 16) in FIG. 1.

In the first step, an operator firstly fixes a cutting blade 32 to the arm body 18 of the support mechanism 4.

A bracket 30 extending from the arm body 18 in the second direction is fixed at the lower end portion of the arm body 18. The bracket 30 is a bar-like member for fixing the cutting blade 32. The end, at the first direction side, of the bracket 30 is fixed to the arm body 18. The cutting blade 32 is fixed to the end, at the second direction side, of the bracket 30.

The cutting blade 32 is, for example, fixed by a clamp or the like disposed at the end of the bracket 30.

The cutting blade 32 has a shank 32b and a cutting edge 32a. The shank 32b is a bar-like portion, and is fixed by the bracket 30 such that the longitudinal direction of the shank 32b is along the up-down direction. The cutting edge 32a has a rectangular shape in which the end thereof is parallel to the axial direction.

The cutting blade 32 is, for example, a flat cutting tool for machining.

Thus, in the first step, the bracket 30 and the cutting blade 32 are fixed to the lower end portion of the arm body 18 from which the tire T has been dismounted.

The cutting blade 32 is disposed at the arm body 18, and can thus be moved parallel to the axial direction (width direction of the compressed snow layer 6) and the up-down direction by the support mechanism 4.

After the cutting blade 32 has been fixed (first step), the operator moves the cutting blade 32 to the first position P1, and the process is shifted to the second step.

The first position P1 is a position on the surface 6a of the compressed snow layer 6 in the width direction of the compressed snow layer 6. As illustrated in FIG. 2, the first position P1 is a predetermined position near the end, at the first direction side, of the compressed snow layer 6. The first position P1 is set so as to position the cutting blade 32 close to the annular portion 2c as much as possible.

FIG. 2 illustrates a state where the cutting blade 32 has already been positioned at the first position.

When the cutting blade 32 has been moved to the first position P1, the operator operates the actuator 17 to move the cutting blade 32 downward and bring the cutting blade 32 into contact with the compressed snow layer 6.

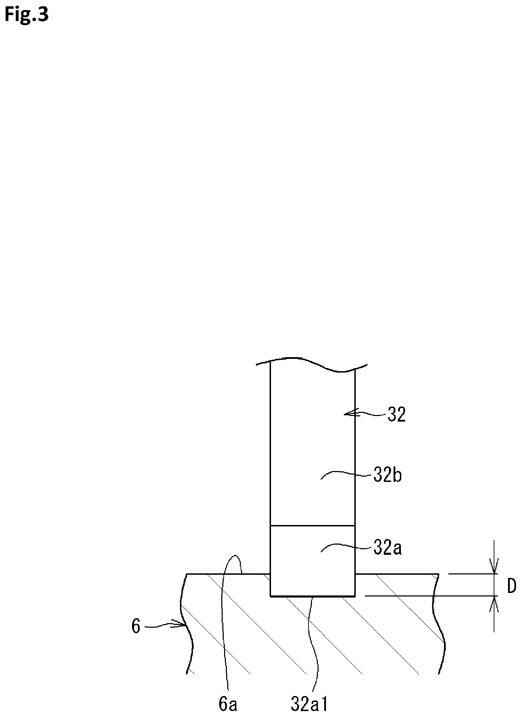

FIG. 3 illustrates a state where the cutting blade 32 is brought into contact with the compressed snow layer 6.

As illustrated in FIG. 3, the cutting blade 32 is held so as to be inserted into the compressed snow layer 6 such that an end 32a1 of the cutting edge 32a is disposed at a predetermined depth D from the surface 6a of the compressed snow layer 6.

At this stage, the surface 6a is a surface that has been compressed during forming of the compressed snow layer 6.

Subsequently, the operator performs parallel movement of the cutting blade 32 from the first position P1 to the second position P2 in the width direction of the compressed snow layer 6 at a predetermined moving speed V2 while rotating the drum 2 such that a circumferential speed of the inner circumferential surface 2a1 of the drum 2 is a predetermined circumferential speed V1.

As illustrated in FIG. 2, the second position P2 is a position on the surface 6a of the compressed snow layer 6 in the width direction of the compressed snow layer 6, similarly to the first position P1. The second position P2 is a predetermined position that is closer to the end, at the second direction side, of the compressed snow layer 6 than to the end, at the first direction side, of the compressed snow layer 6. The second position P2 is set so as to position the cutting blade 32 close to the disk-shaped portion 2b (FIG. 1) as much as possible.

At this time, the end 32a1 of the cutting edge 32a is inserted in the compressed snow layer 6 so as to be disposed at the predetermined depth D from the surface 6a of the compressed snow layer 6. Therefore, when the drum 2 is rotated, the surface 6a of the compressed snow layer 6 is cut by the cutting blade 32.

Furthermore, since the cutting blade 32 is moved parallel to the width direction of the compressed snow layer 6, a cut trace is formed helically with the width of the end 32a1 of the cutting edge 32a, on the surface 6a, by the cutting blade 32.

The cut trace is helically formed without forming gaps in the axial direction. Therefore, the surface 6a of the compressed snow layer 6 can be evenly cut.

The cut surface is formed by such a cut trace on the surface 6a of the compressed snow layer 6.

The circumferential speed V1 of the drum 2 and the moving speed V2 of the cutting blade 32 are appropriately set such that the cut trace is helically formed without forming gaps in the axial direction.

When the cutting blade 32 reaches the second position P2, the second step ends.

Thus, in the second step, the cutting blade 32 is brought into contact with the surface 6a of the compressed snow layer 6 such that the end 32a1 of the cutting blade 32 is disposed at the predetermined depth D from the surface 6a of the compressed snow layer 6, and the cutting blade 32 is moved between the first position P1 and the second position P2 of the surface 6a of the compressed snow layer 6 in parallel with the width direction of the compressed snow layer 6 while the drum 2 is rotated at a predetermined speed.

Subsequently, the operator operates the actuator 17 to further move the cutting blade 32 downward, and insert the cutting blade 32 into the compressed snow layer 6. The cutting blade 32 is held so as to be inserted in the compressed snow layer 6 such that the end 32a1 is disposed at the predetermined depth D from the cut surface in the surface 6a of the compressed snow layer 6.

Subsequently, the operator performs parallel movement of the cutting blade 32 from the second position P2 to the first position P1 in the width direction of the compressed snow layer 6 at the predetermined moving speed V2 while rotating the drum 2 such that the circumferential speed of the inner circumferential surface 2a1 of the drum 2 is the circumferential speed V1.

That is, the operator causes the cutting blade 32 to reciprocate in the axial direction, and thus, the second step is repeatedly performed.

When the compressed snow layer 6 is determined to have a predetermined thickness, the operator halts repeating the second step. That is, the operator performs the third step of repeating the second step until the compressed snow layer 6 has a predetermined thickness.

The cut surface in the surface 6a of the compressed snow layer 6 that has the predetermined thickness becomes the snow surface 7 for evaluation.

When the compressed snow layer 6 has the predetermined thickness and the third step is ended, the operator moves the cutting blade 32 from the inner circumferential side of the drum 2 to outside of the drum 2, and removes snow which has been cut out by the cutting blade 32 from the inside of the drum 2 to outside of the drum 2.

Thus, the cut snow can be inhibited from affecting the tire evaluation.

Thus, the snow surface 7 for evaluation is formed at the surface 6a of the compressed snow layer 6.

In the above-described configuration, the snow surface 7 for evaluation can be formed by cutting the surface 6a of the compressed snow layer 6 by the cutting blade 32 disposed at the support mechanism 4. Therefore, a mechanism or the like for providing the cutting blade 32 need not be added, and the even snow surface 7, for evaluation, in which unevenness is reduced can be formed by appropriately adjusting the cutting conditions.

The predetermined depth D is preferably 0.3 mm or more and 5.0 mm or less.

If the predetermined depth D is less than 0.3 mm, a cut amount of the compressed snow layer 6 is reduced, and a time required for forming the snow surface 7 for evaluation becomes long. If the predetermined depth is more than 5.0 mm, a cut amount of the compressed snow layer 6 becomes relatively great, and adjustment of the thickness of the compressed snow layer 6 may become difficult.

In a case where the predetermined depth is 0.3 mm or more and 5.0 mm or less, the snow surface 7 for evaluation can be appropriately formed.

The distance from the first position P1 to the second position P2 is preferably 1000 mm or more and 3000 mm or less.

If the distance from the first position P1 to the second position P2 is less than 1000 mm, the snow surface cannot be sufficiently obtained for the tire evaluation. If the distance from the first position P1 to the second position P2 is more than 3000 mm, a time required for forming the snow surface 7 for evaluation becomes long. In a case where the distance from the first position P1 to the second position P2 is 1000 mm or more and 3000 mm or less, the snow surface 7 for evaluation can be appropriately formed.

The predetermined circumferential speed V1 is preferably 30 km/h or higher and 100 km/h or lower.

If the circumferential speed V1 is lower than 30 km/h, a time required for forming the snow surface 7 for evaluation becomes long. If the circumferential speed V1 is higher than 100 km/h, an adjustment allowance of the moving speed V2 for parallel movement of the cutting blade 32 in the width direction is reduced, and appropriate setting of the cutting condition becomes difficult. In a case where the circumferential speed V1 of the drum 2 is 30 km/h or higher and 100 km/h or lower, the snow surface 7 for evaluation can be appropriately formed in a short time period.

The moving speed V2 of the cutting blade 32 is preferably 5 mm/s or higher and 40 mm/s or lower.

If the moving speed V2 is lower than 5 mm/s, the circumferential speed V1 of the drum 2 needs to be significantly reduced in some cases, and a time required for forming the snow surface 7 for evaluation becomes long. If the moving speed V2 is higher than 40 mm/s, the circumferential speed V1 of the drum needs to be significantly increased in some cases, and appropriate setting of the cutting condition becomes difficult. In a case where the moving speed V2 of the cutting blade 32 is 5 mm/s or higher and 40 mm/s or lower, the snow surface 7 for evaluation can be appropriately formed in a short time period.

In the present embodiment, an example in which a flat cutting tool for machining is used as the cutting blade 32 is described. However, the present invention is not limited to this example. For example, a metal piece having a sharp tip may be used as long as the surface 6a of the compressed snow layer 6 can be flatly cut.

### [Verification test]

Next, a verification test in which tire evaluation was performed by using the snow surface 7, for evaluation, which was formed by the above-described forming method, and whether or not tire evaluation was able to be accurately performed was determined, will be described.

In this test, snow surfaces for evaluation according to the following example and comparative example were each formed in the drum 2, the tire T was caused to run by using the snow surface for evaluation, and a relationship between a coefficient of friction and a sliding speed was compared.

The snow surface for evaluation according to the example was formed in the compressed snow layer 6 in the drum 2 under the following conditions.

Temperature in test room: -10 to -1°C
Predetermined depth D in cutting of the compressed snow layer: 1 to 50 mm
Circumferential speed V1 of the drum 2: 10 to 120 km/h
Moving speed V2 of the cutting blade 32: 1 to 50 mm/s
Distance from the first position P1 to the second position P2: 700 to 4000 mm
Thickness of the base layer 5: 0.5 to 5 cm
Thickness of the compressed snow layer 6: 0.5 to 7 cm

The snow surface for evaluation according to the comparative example was formed in the drum 2 in the following procedure.
(a) An ice base layer was firstly formed on a floor surface of an environmental chamber in which the temperature of the chamber was set to -5°C,
(b) a first snow layer having a thickness of 2 cm was formed on the base layer by a snowmaking machine,
(c) the temperature of the chamber was lowered to -8°C, and a second snow layer having a thickness of 4 cm was thereafter formed on the first snow layer,
(d) the snow layers were compressed,
(e) water was sprayed onto the compressed snow layer surface,
(f) a sled having a plurality of teeth illustrated in FIG. 5 was caused to run on the snow surface covered with a water film, and
(g) (c) to (f) were repeated until the snow layer (first snow layer and second snow layer) had a thickness of 5 cm.

The tire T that was caused to run on the snow surface for evaluation was the same between the example and the comparative example.

In each of the example and the comparative example, the tire T was caused to run and a relationship between a coefficient of friction and a sliding speed was obtained.

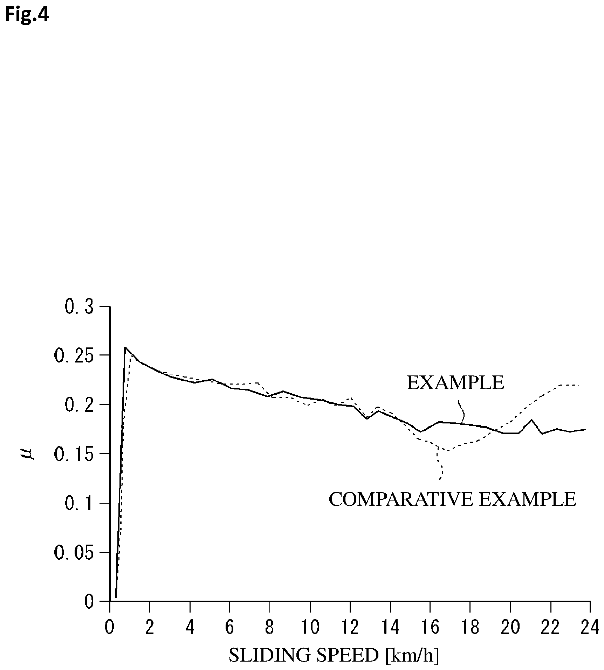

FIG. 4 shows a graph representing a relationship between a coefficient of friction and a sliding speed. In FIG. 4, the horizontal axis represents sliding speeds, and the vertical axis represents coefficients of friction.

The sliding speed represents a difference in speed between the tire and the snow surface for evaluation. That is, the sliding speed represents a difference between the circumferential speed V1 of the drum 2 and the tire circumferential speed.

The coefficient of friction was obtained by using output of the load measurement device 22 for measuring a load acting on the tire, and outputs of the first rotation speed sensor and the second rotation speed sensor.

As illustrated in FIG. 4, in the comparative example, since the snow surface was uneven, great fluctuation was found in the profile of the graph representing the relationship between the coefficient of friction and the sliding speed. Particularly, the fluctuation was great in a range in which the sliding speed was 14 km/h or higher.

Meanwhile, in the example, no great fluctuation was found in the profile of the graph representing the relationship between the coefficient of friction and the sliding speed, and the relationship was smoothly expressed.

This result indicates that an even snow surface in which unevenness was reduced was obtained, and further indicates that it is clear that accuracy for the tire evaluation test was able to be enhanced.

The scope of the present disclosure is defined not by the foregoing description but by the claims, and all modifications that come within the meaning and scope of equivalence to the claims are intended to be included.

## Claims

1. A method for forming a snow surface for tire evaluation in which the snow surface for tire evaluation is formed on a surface (6a) of a compressed snow layer (6) disposed at an inner surface of a drum (2), the method comprising:
a first step of disposing a cutting blade (32) for cutting the compressed snow layer (6), at a support mechanism (4) for supporting a tire (T) that runs on an inner surface side of the drum (2);
a second step of bringing the cutting blade (32) into contact with the compressed snow layer (6) so as to dispose an end (32a1) of the cutting blade (32) at a predetermined depth (D) from the surface (6a) of the compressed snow layer (6), and moving the cutting blade (32) between a first position (P1) and a second position (P2) of the surface (6a) of the compressed snow layer (6) in parallel with a width direction of the compressed snow layer (6) while rotating the drum (2) at a predetermined circumferential speed (V1); and
a third step of repeating the second step until the compressed snow layer (6) has a predetermined thickness.

2. The method for forming a snow surface for tire evaluation according to claim 1, further comprising a step of removing, after the third step, snow which has been cut out by the cutting blade (32).

3. The method for forming a snow surface for tire evaluation according to claim 1, wherein a cutting trace is helically formed by the cutting blade (32) without forming gaps in an axial direction.

4. The method for forming a snow surface for tire evaluation according to any one of claim 1 to claim 3, wherein the predetermined depth (D) is 0.3 mm or more and 5.0 mm or less.

5. The method for forming a snow surface for tire evaluation according to any one of claim 1 to claim 3, wherein a distance from the first position (P1) to the second position (P2) is 1000 mm or more and 3000 mm or less.

6. The method for forming a snow surface for tire evaluation according to any one of claim 1 to claim 3, wherein the predetermined circumferential speed (V1) is 30 km/h or higher and 100 km/h or lower.

7. The method for forming a snow surface for tire evaluation according to any one of claim 1 to claim 3, wherein a moving speed (V2) of the cutting blade (32) is 5 mm/s or higher and 40 mm/s or lower.
